# NEUE EUROPÄISCHE PATENTSCHRIFT

(11) **EP 0 746 580 B2**
(45) Veröffentlichungstag und Bekanntmachung des Hinweises auf die Entscheidung über den Einspruch: **31.03.2004**
(45) Hinweis auf die Patenterteilung: 26.08.1998
(21) Anmeldenummer: 95910491.0
(22) Anmeldetag: 16.02.1995
(51) Int. Cl.: C08G 18/70, B65D 83/14

(54) **SCHAUMKUNSTSTOFF AUS EINWEG-DRUCKBEHÄLTERN**
CELLULAR PLASTIC FROM DISPOSABLE PRESSURIZED AEROSOL CANS
MATIERE PLASTIQUE CELLULAIRE PRODUITES AU MOYEN DE RECIPIENTS SOUS PRESSION JETABLES

(30) Priorität: 24.02.1994 DE 4405983; 24.11.1994 DE 4441696
(43) Veröffentlichungstag der Anmeldung: 11.12.1996
(73) Patentinhaber: Henkel Kommanditgesellschaft auf Aktien, 40191 Düsseldorf (DE)
(72) Erfinder: KLUTH, Hermann, D-40595 Düsseldorf (DE); KLAUCK, Wolfgang, D-40670 Meerbusch (DE); DAUTE, Peter, D-27616 Beverstedt (DE); KOLENDA, Felicitas, D-40789 Monheim (DE); HÜBNER, Wilfried, D-40764 Langenfeld (DE)
(86) Internationale Anmeldenummer: PCT/EP1995/000566
(87) Internationale Veröffentlichungsnummer: WO 1995/023173

(56) Entgegenhaltungen:
- EP-A- 0 107 014
- EP-A- 0 340 584
- EP-A- 0 420 026
- EP-A- 0 655 394
- WO-A-94/18256
- DE-A- 4 025 843
- DE-A- 4 038 400
- FR-A- 2 022 204

## Beschreibung

Die Erfindung betrifft eine Zusammensetzung zur Herstellung von Schaumkunststoffen aus Einweg-Druckbehältern sowie diese Schaumkunststoffe selbst und deren Verwendung.

Schaumkunststoff sind Werkstoffe zelliger Struktur, z.B. aus PU, PS, PE oder PVC. Sie entstehen entweder durch drucklose Schaumerzeugung (z.B. mechanisch) oder durch plötzliches Entspannen von (z.B. verflüssigtem) Gas enthaltenden Polymeren oder Prepolymeren. Wird der Schaumkunststoff erst am Ort seiner Verwendung erzeugt, so spricht man von einem Ortschaum (DIN 18159). Eine besondere Form solcher Ortschäume sind feuchtigke itshärtende Einkomponenten-Systeme. Die zu verschäumende Zusammensetzung befindet sich dabei in Druckbehältern, vor allem in Einweg-Druckbehältern (Aerosoldosen), wegen deren einfachen Handhabung. Ortschäume aus Polyurethan dienen vor allem im Bauwesen zum Dichten, Dämmen und Montieren, z.B. von Fugen, Dachflächen, Fenstern und Türen.

Die Herstellung - von Polyurethan-Schaumkunststoffen aus Einweg-Druckbehältern ist bekannt. Dabei wird ein isocyanatgruppenhaltiges Prepolymer durch Reaktion von Polyolen unter Zusatz eines Schaumstabilisators und Katalysators sowie gegebenenfalls von Weichmachern, Flammschutzmitteln und weiteren Zusatzstoffen mit organischen Di- und/oder Polyisocyanaten hergestellt. Diese Umsetzung erfolgt in Gegenwart von verflüssigtem Treibgas in einem Druckbehälter. Nach Abschluß der Prepolymerbildung kann der Schaum über ein Ventil dosiert ausgetragen werden. Der Schaum besitzt eine sahnige Konsistenz und härtet durch Einwirkung von Umgebungsfeuchtigkeit, z.B. aus der Luft unter Volumenvergrößerung aus (Einkomponentenschaum). Unmittelbar vor der Anwendung kann man auch aus einem weiteren Druckbehälter ein Aktivierungsmittel zugeben. Dieses bewirkt eine schnellere, klebfreie Durchhärtung des Schaumes (Zweikomponentenschaum). Das Aktivierungsmittel kann ein kurzkettiges Diol sein, z.B. Ethylen-, Propylen-Glykol, Butandiol-1,4 oder Glyzerin.

Ein derartig konfektioniertes Ausgangsprodukt zur Herstellung von Einkomponenten-Polyurethan-Schaumstoffen wird in der DE 40 25 843 beschrieben, wobei die Mischung ein Prepolymeres mit einer dvnamischen Viskosität von 200 bis 4 000 mPa·s, gemessen bei 20 °C und ein Gehalt an NCO-Gruppen von 13 bis 15 Gew.-% enthält. Auch hier verläuft die Bildung des Prepolymeren in der Aerosoldose.

Analog dazu wird auch in der DE 39 11 784 das Prepolymer entweder direkt in der Aerosoldose oder in einem anderen Druckbehälter hergestellt.

Ein kritischer Punkt dabei ist die Zusammensetzung des NCO-Prepolymeren. Es wird nämlich praktisch ohne Ausnahme direkt in den Druckbehältern aus Gemischen von technischem Diphenylmethan-4,4'-diisocyanat (MDI) der durchschnittlichen Funktionalität 2,3 bis 2,7 und aus Polyolen mit einer durchschnittlichen Funktionalität von 2,5 bis 3,5 in einem NCO: OH-Verhältnis von 3 bis 10, vorzugsweise von 4 bis 6 : 1 in Gegenwart eines tertiären Amins als Katalysator hergestellt. Wegen des Überschusses an MDI liegt noch viel freies, nicht umgesetztes MDI vor, und zwar in einer Größenordnung von ca. 7 bis 15 Gew.-%, bezogen auf den Gesamtinhalt des Druckbehälters. Wegen dieses Gehaltes an monomerem MDI müssen die Zusammensetzungen mit "mindergiftig, enthält Diphenylmethan-4,4'-diisocyanat" und dem Gefahrensymbol "Andreaskreuz" gekennzeichnet werden. Würde man anstelle von MDI leichter flüchtige Polyisocyanate zur Herstellung des Prepolymeren einsetzen, so enthielten die Reaktionsmischungen ebenfalls größere Mengen an nicht umgesetztem Diisocyanat. Laut Gefahrstoff-Verordnung müßten diese Produkte dann sogar mit "giftig" und mit dem Gefahrensymbol "Totenkopf" gekennzeichnet werden. Wegen dieser verstärkten Giftigkeit wurden derartige Diisocyanate in Dämm- und Montageschäumen aus Aerosoldosen nicht angewendet. Außerdem sind die Aushärtungszeiten von Prepolymeren aus aliphatischen oder cycloaliphatischen Diisocyanaten zur Verwendung als einkomponentige Dämm- und Montageschäume zu lang. Deshalb wird für diesen Einsatzzweck tatsächlich nur MDI verwendet.

DE-A-4 038 400 beschreibt PU-Schaumstoffe. Ein niedriger Gehalt an Monomeren wird nicht erwähnt. Ein solcher Monomergehalt ist aus EP-A-0 107 014 bekannt, jedoch nicht für Schaumstoffe.

Die aus den Prepolymeren herstellten Schaumkunststoffe stellen kein Problem dar, da das freie MDI mit Wasser reagiert und so als Harnstoff-Einheit fest mit dem vernetzten Polyurethan verbunden ist.

Problematisch ist aber dagegen die Entsorgung von Resten solcher Prepolymeren in den Einweg-Druckbehältern. Nach den geltenden abfallrechtlichen Bestimmungen in Deutschland sind sie als Sonderabfall zu entsorgen. Die Kosten für diese Entsorgung steigen wegen des begrenzten Deponieraumes immer weiter. Es besteht daher ein Bedarf nach Dämm- und Montageschäumen, deren Reste oder Abfall leicht zu entsorgen sind.

Weiterhin problematisch sind die bei der Schaumerzeugung austretenden Dämpfe des Diphenylmethan-4,4'-diisocyanates (MDI). Wegen dieser Dämpfe müssen MDI-haltige Formulierungen mit dem Hinweis "Gesundheitsschädlich beim Einatmen; reizt die Augen, Atmungsorgane und die Haut; Sensibilisierung durch Einatmen möglich" versehen werden. Da der MAK-Wert von MDI von ursprünglich 0,02 mg/m³ auf 0,01 mg/m³ und neuerdings auf 0,005 mg/m³ abgesenkt wurde, kann bei Intensiv-Anwendern der MAK-Wert leicht überschritten werden. Zur Vermeidung der davon ausgehenden Gefahren sind dann umfangreiche Arbeitsschutzmaßnahmen erforderlich. Daher besteht ein Bedarf nach Damm- und Montageschäumen, die eine erheblich verminderte Emission von Diphenylmethandiisocyanat bei der Verarbeitung zeigen.

Ein zusätzliches Problem stellen die Brandeigenschaften der PU-Schäume dar. Bei Bauanwendungen müssen diese in den meisten Ländern bestimmten Vorschriften entsprechen, in Deutschland der DIN-4102-B2 (normal entflammbar). Dazu sind hohe Zusätze von flammenhemmenden Mitteln, die Phosphor. Chlor und Brom enthalten, erforderlich. Solche Zusätze können nichtreaktiv sein, wie beispielsweise Tris(chlorpropyl)phosphat oder auch reaktiv sein wie Tetrabrombisphenol A. Beim Beflammen solcher Flammschutzmittel enthaltender PU-Schäume entstehen toxische Brandgase wie HCl, HBr usw. Die Rauchgasdichte ist ein weiteres Kriterium für die Zulassung. Wegen der hohen Zusätze an Flammschutzmitteln bei üblichen 1 K-PU-Schäumen auf Basis von Polyetherpolyolen oder oleochemischen Polyolen - in der Regel beträgt der Gehalt 20 bis 25 Gew.-%, bezogen auf den Doseninhalt - bilden sich große Mengen an toxischen Brandgasen und die Rauchgasdichte ist entsprechend hoch. Es besteht daher ein Bedarf nach Schaumstoffen, die keine Bromverbindungen als Flammschutzmittel enthalten und darüberhinaus möglichst auch nicht chlorhaltige Flammschutzmittel. Allenfalls sollten sie einen minimalen Gehalt an halogenfreien phosphorhaltigen Flammschutzmitteln enthalten.

Naheliegend wäre es, die Dämm- und Montageschäume aus anderen Polymeren als PU herzustellen, z.B. aus Polystyrol.

Es hat daher nicht an Versuchen gefehlt, monomerenarme NCO-Prepolymere zur Herstellung von PU-Schaumkunststoffen einzusetzen. In der DE 44 05 983 werden PU-Kunststoffschäume beschrieben, welche als Hauptkomponente Cyclotrimerisate des Hexamethylen-1,6-diisocyanate enthalten. Die dort aufgeführten Zusammensetzungen sind jedoch sehr teuer und ihre Herstellung sehr aufwendig.

Die erfindungsgemäße Lösung ist in Anspruch 1 definiert und besteht insbesondere darin, daß der in dem Druckbehälter verbliebene Rest der Zusammensetzung mit dem Isocyanat-Prepolymeren als reaktiver Komponente spätestens 24 Stunden nach der Verschäumung einen Gehalt an Diisocyanat-Monomeren von weniger als 2,0, insbesondere weniger als 1,0 und vor allem weniger als 0,5 Gew.-% hat, bezogen auf die Zusammensetzung insgesamt. Vorzugsweise werden diese Werte bereits nach 2 Stunden oder gar nach 0,5 Stunden erreicht.

Zweckmäßigerweise hat die Zusammensetzung bereits vor der Verschäumung einen so niedrigen Gehalt an Diisocyanat-Monomeren.

Das wird vorzugsweise dadurch erreicht, daß das Prepolymere bereits vor der Verschäumung solche niedrige Gehalte an Diisocyanaten hat, z.B. weil man es destilliert hat. Es kann aber auch zweckmäßig sein, die Diisocyanat-Monomeren durch Zusatz von Trimerisierungskatalysatoren unmittelbar vor oder nach der Verschäumung zu polymerisieren. Im Falle von Einkomponentensystemen ist es auch möglich, nach der Verschäumung der zurückbleibenden Zusammensetzung eine OH-Verbindung zuzusetzen, insbesondere einen Monoalkohol.

Die Zusammensetzung besteht notwendigerweise aus mindestens einem Isocyanat-Prepolymeren, mindestens einem Katalysator für die Reaktion der Isocyanat-Gruppe mit der OH-Gruppe, mindestens einem Treibmittel und mindestens einen Schaumstabilisator. Darüberhinaus können noch weitere Additive zugesetzt werden, z.B. Lösungsmittel, Flammschutzmittel, Weichmacher, Zellregler und Alterungsschutzmittel.

Unter einem "Isocyanat-Prepolymeren" wird ein Oligomeres mit reaktiven NCO-Gruppen verstanden, welches als Voraddukt am Aufbau des Polymeren beteiligt ist. Bei den Isocyanaten handelt es sich vorzugsweise um aliphatische Diisocyanate mit 2 bis 36, insbesondere mit 4 bis 7 C-Atomen oder um cycloaliphatische Diisocyanate mit 5 bis 30, insbesondere mit 8 bis 15 C-Atomen. Es können aber auch aromatische Diisocyanate mit 8 bis 20, insbesondere mit 8 bis 11 Kohlenstoffatomen verwendet werden. Die Diisocvanate sollten spätestens bei 180 °C bei 10 mbar sieden. Konkrete Beispiele für geeignete Diisocyanate sind: Hexamethylendiisocyanat (HDI), Tetramethylendiisocyanat (TMDI). Isophorondiisocyanat (IPDI), Toluylen-2,6-diisocyanat (TDI), Toluylen-2,4-diisocyanat (2,6-TDI), m-Tetramethylxylenediisocyanate (m-TMXDI), p-Tetramethylxylenediisocyanate (p-TMXDI), Trimethylhexamethylendiisocyanat (TMDI), Dimeryldiisocyanat (DDI), p-Phenylendiisocyanat (PPDI), Naphthylen-1,5'-diisocyanat (NDI), Diphenylmethan-4,4'-diisocyanat (MDI), Tolidindiisocyanat (TODI), Bis(4-isocyanatocyclohexyl)-methan (H12-MDI), 3(4)-Isocyanatomethyl-1-methyl-cyclohexylisocyanat (IMCI), Phenylisocyanat sowie Esterisocyanate aus Isocyanatocarbonsäurechloriden und silylierten Polyalkoholen (siehe Mormann: Tetrahedron Letters 28 (1987) 3087 ff und Mormann: Makromol. Chem., Makrom. Symp. 25 (1989) 117 ff).

Von den Diisocyanaten sind die bevorzugt, deren NCO-Gruppen eine unterschiedliche Reaktivität haben. Sie ermöglichen die Herstellung von monomerenarmen Prepolymeren aus Polyolen ohne Destillation. Diisocyanate in diesem Sinne sind z.B. Isophorondiisocyanat und 2,4-Toluylendiisocyanat. Bevorzugt werden Prepolymere aus IPDI mit TMP (Trimethylolpropan), sofern diese monomerenarm hergestellt wurden. Ein Verfahren zur Herstellung von Polyurethanprepolymeren mit geringem Restmonomerengehalt wird in der EP 0 150 444 beschrieben. Demnach soll in einem ersten Reaktionsschritt das Diisocyanat mit einem mehrfunktionellen Alkohol im Verhältnis OH : NCO zwischen 4 und 0,55 umgesetzt werden. Nach Abreaktion praktisch aller schnellen NCO-Gruppen mit einem Teil der vorhandenen OH-Gruppen wird in einem zweiten Reaktionsschritt ein - im Verhältnis zu den weniger reaktiven NCO-Gruppen des Isocyanats des Reaktionsschrittes I - reaktiveres Diisocyanat äquimolar oder im geringen Überschuß, bezoqen auf noch freie OH-Gruppen zugesetzt. Gewünschtenfalls können Katalysatoren zugesetzt oder höhere Temperaturen angewendet werden. Der Inhalt der EP 0 150 444 wird ausdrücklich auch zum Bestandteil dieser Anmeldung gemacht.

Die Diisocyanate können auch bis zu einem molaren Anteil von 40, insbesondere 20 % durch Mono- oder TriIsocyanate ersetzt werden. Konkrete Beispiele sind: Phenylisocyanat.

Aus den Diisocyanaten können ohne weitere reaktive Komponente Isocyanat-Prepolymere hergestellt werden, indem sie zu Isocyanuraten trimerisiert werden. Diese Reaktion läuft bekanntlich in Gegenwart geeigneter Trimerisierungskatalysatoren ab (siehe z.B. Kunststoff-Handbuch, Bd. 7, Polyurethane, Seite 108). Besonders vorteilhaft sind Gemische aus Cyclotrimerisaten aus aliphatischen und cycloaliphatischen Diisocyanaten, insbesondere Mischtrimerisate daraus.

Die Isocyanat-Prepolymere können aber auch durch Reaktion von Diisocyanaten mit Polyolen in Gegenwart geeigneter Katalysatoren hergestellt werden. Derartige Katalysatoren sind solche, die die Reaktion der Isocyanatgruppe mit der OH-Gruppe beschleunigen, nicht jedoch deren Trimerisierung. Konkrete Beispiele sind 2,2'-Dimorpholinodiethylether, Bis(2-dimethylaminoethyl)ether, Dabco X-DM (Fa. Air Products) sowie N-Ethylmorpholin. Unter Umständen können aber auch andere Katalysatoren in Frage kommen, wenn sie die Isocyanatgruppen während der Lagerung nicht trimerisieren, z.B. N-substituierte Morpholine sowie deren Mischungen mit Propylenoxid-Addukten des Triethanolamins, sowie die bekannten Metallkatalysatoren, insbesondere des Zinns.

Als Polvole zur Herstellung der Prepolymeren können alle üblichen lang- oder kurzkettigen hydroxylgruppenhaltigen Polyester und Polyether verwendet werden.

Die kurzkettigen Polyole werden in einer Menge von 0 bis 0,5, insbesondere 0,1 bis 0,3 HO-Äquivalenten pro NCO-Gruppe eingesetzt. Sie haben ein Molekulargewicht von weniger als 1 000, insbesondere weniger als 100. Konkrete Beispiele sind die Polyole, die als Ausgangsverbindungen zur Herstellung der langkettigen Polyole verwendet werden.

Als Polyester können Ester von Dicarbonsäuren, bevorzugt aliphatische Dicarbonsäuren mit 4 bis 8 Kohlenstoffatomen im Alkylenrest, die mit mehrwertigen Alkoholen, vorzugsweise Diolen umgesetzt werden, Anwendung finden, wobei diese ebenfalls freie OH-Gruppen zur Reaktion aufweisen müssen. Beispiele für aliphatische Dicarbonsäuren sind Pimelinsäure, Glutarsäure, Azelainsäure, Sebacinsäure sowie vorzugsweise Bernstein- und Adipinsäure und aromatische Dicarbonsäuren wie Phthalsäure, Isophthalsäure und Terephthalsäure. Als zwei- oder mehrwertige Alkohole können Ethylenglykol, Diethylenglykol, 1,2- bzw. 1,3-Propylenglykol, Triethylenglykol, Dipropylenglykol, Glycerin, Trimethylolpropan sowie 1,4-Butandiol und 1,6 Hexandiol zur Anwendung kommen.

Es können aber auch Polyesterpolyole oleochemischer Herkunft verwendet werden, die keine freien Epoxidgruppen aufweisen und durch vollständige Ringöffnung von epoxidierten Triglyceriden eines wenigstens teilweise olefinisch ungesättigten Fettsäure enthaltenden Fettsäuregemisches mit einem oder mehreren Alkoholen mit 1 bis 12 C-Atomen und anschließender partieller Umesterung der Triglyceridderivate zu Alkylesterpolyolen mit 1 bis 12 C-Atomen im Alkylrest hergestellt worden sind (siehe DE 36 26 223).

Als Polyether können die nach dem bekannten Verfahren aus einem oder mehreren Alkylenoxiden mit 2 bis 4 Kohlenstoffatomen im Alkylenrest und einem Startermolekül, das 2 bis 4 aktive Wasserstoffatome enthält, hergestellten Produkte Verwendung finden. Geeignete Alkylenoxide sind beispielsweise Tetrahydrofuran, 1,3, Propylenoxid, 1,2- bis 2,3-Butylenoxid und Ethylenoxid. Als Startermoleküle kommen in Betracht: Wasser, Dicarbonsäuren, mehrwertige Alkohole wie Ethylenglykol, Propylenglykol-1,2, Diethylenglykol, Dipropylenglykol, Glycerin, Trimethylolpropan, Pentaerythrit, Sorbit und Saccharose sowie amonogruppenhaltige Verbindungen. Weitere Polyole sind: Polycarbonatpolyole und Dimerdiole (Fa. Henkel).

Aus den Diisocyanaten und den Polyolen werden auf bekannte Art und Weise die Isocyanat-Polymeren hergestellt. Zur Herstellung von monomerenarmen Isocyanat-Prepolymeren werden die im Überschuß vorhandenen flüchtigen Isocyanate bei Temperaturen von 100 bis 160 °C im Vakuum unter Verwendung eines Dünnschicht- oder Kurzweg-Verdampfers abdestilliert. Konkretere Angaben zur Herstellung von monomerenarmen Isocyanat-Prepolymeren durch Destillation werden z.B. in der DE 41 40 660 angegeben. Dort werden Ether- und Urethangruppen aufweisende Polyisocyanate auf Basis von Polyhydroxypolyethem und Toluylendiisocyanat hergestellt, die einen NCO-Gehalt von 11,8 bis 14,4 Gew.-%, eine mittlere NCO-Funktionalität von 3,1 bis 4,0 und einen Gehalt an freiem Toluylendiisocyanat von weniger als 0,1 Gew.-% aufweisen. Der Inhalt dieser Schrift wird ausdrücklich auch zum Inhalt der vorliegenden Patentanmeldung gemacht, soweit er sich auf die Herstellung der Prepolymeren bezieht. Nicht einbezogen wird dagegen die Anwendung der dortigen Prepolymeren zur Herstellung von Polyurethanlacken.

Auch in den Patentschriften DE 15 95 273 und US 4 128 825 wird die Herstellung bestimmter Polyaddukte des TDI mit Restmonomerengehalten von minimal 0,2 % beschrieben. Auch hier wird die Herstellung dieser Prepolymeren ausdrücklich in die vorliegenden Anmeldung einbezogen.

Von den beiden Möglichkeiten monomerenarme Isocyanat-Prepolymere herzustellen, wird die Destillation gegenüber der Herstellung mit unterschiedlich reaktiven Diisocyanatgruppen bevorzugt. Das hat zur Folge, daß dann die Prepolymere nicht wie bisher üblich in dem Druckgefäß hergestellt werden können, sondern außerhalb des Druckgefäßes.

Von besonderer Bedeutung ist folgende Erkenntnis:
Verwendet man zur Herstellung des Prepolymeren technische Gemische des MDI mit Funktionalitäten von mehr als 2,7, z.B. Desmodur vp-pu-1194, so erhält man wegen der Bildung von vernetzten Gelanteilen oder hochmolekularen Spezies hochviskose, nicht mehr verarbeitbare Produkte. Es wurde nun gefunden, daß entgegen gängigen Erkenntnissen Schaumkunststoffe aus technischem MDI hergestellt werden können, wenn man die Di-funktionellen Isocyanate entfernt, so daß nur noch im wesentlichen Moleküle mit mindestens 3 Isocyanatgruppen, vorzugsweise 3 bis 10 Isocyanatgruppen und den entsprechenden aromatischen Ringen vorhanden sind (Polymer-MDI).

Dieses Polymer-MDI wird aus technischem MDI mit einer Funktionalität von mehr als 2,3, insbesondere 2,4 bis 2,7 und vorzugsweise ca. 2,7 durch Entfernung der mono- und difunktionellen Isocyanate hergestellt. Zur Entfernung eignen sich insbesondere die Dünnschichtoder Kurzweg-Destillation im Vakuum oder die Extraktion sowie die fraktionierte Kristallisation. Der Gehalt an Diisocyanaten soll dabei auf weniger als 20, vorzugsweise weniger als 10, insbesondere weniger als 5 Gew.-% verringert werden (HPLC). Die Viskosität des Polymer-MDIs beträgt 5 bis 2000 Pa·s bei 25 °C, vorzugsweise 20 bis 500, gemessen nach DIN 53015.

Falls die Viskosität des Polymer-MDIs zu niedrig sein sollte, was in der Regel bei weniger als 5 000 mPas der Fall ist, dann wird das Polymer-MDI mit Diolen zu einem Polymer-MDI-Prepolymeren umgesetzt.

Unter einem "Polymer-MDI-Prepolymeren" wird ein Oligomeres mit reaktiven NCO-Gruppen verstanden, welches als Voraddukt aus dem Polymer-MDI und mindestens einem Polyol, insbesondere einem Diol am Aufbau des Polymeren beteiligt ist. Bei dem Polymer-MDI handelt es sich vorzugsweise um ein Polymer-MDI mit einer Viskosität von > 10 000 mPas bei 25 °C. Als Polyole können alle zur Herstellung der Prepolymeren üblichen hydroxylgruppenhaltigen Polyester und Polyether (langkettige Polyole) mit einer Funktionalität von > 1 bis 3, insbesondere 2 sowie kurzkettige Diole verwendet werden.

Als Polyester-Diole können Ester von Dicarbonsäuren, bevorzugt aliphatische Dicarbonsäuren mit 4 bis 8 Kohlenstoffatomen im Alkylenrest, die mit Diolen umgesetzt werden, Anwendung finden, wobei diese ebenfalls freie OH-Gruppen zur Reaktion aufweisen müssen. Beispiele für aliphatische Dicarbonsäuren sind Pimelinsäure, Glutarsäure, Azelainsäure, Sebacinsäure sowie vorzugsweise Bernstein- und Adipinsäure und aromatisceh Dicarbonsäuren wie Phthalsäure und Terephthalsäure. Als zweiwertige Alkohole können Ethylenglykol, Diethylenglykol, 1,2- bzw. 1,3 Propylenglykol, Dipropylenglykol, 1,4-Butandiol und 1,6 Hexandiol zur Anwendung kommen.

Es können aber auch Polyesterpolyole oleochemischer Herkunft verwendet werden, die keine freien Epoxidgruppen aufweisen und durch vollständige Ringöffnung von epoxidierten Triglyceriden eines wenigstens teilweise olefinisch ungesättigten Fettsäure enthaltenden Fettsäuregemisches mit einem oder mehreren Alkoholen mit 1 bis 12 C-Atomen und anschließender partieller Umesterung der Triglyceridderivate zu Alkylesterpolyolen mit 1 bis 12 C-Atomen im Alkylrest hergestellt worden sind (siehe DE 36 26 223).

Als Polyether-Diole können die nach dem bekannten Verfahren aus einem oder mehreren Alkylenoxiden mit 2 bis 4 Kohlenstoffatomen im Alkylenrest und einem Startermolekül, das 2 aktive Wasserstoffatome enthält, hergestellten Produkte Verwendung finden. Geeignete Alkylenoxide sind beispielsweise Tetrahydrofuran, 1,3, Propylenoxid, 1,2- bis 2,3-Butylenoxid und Ethylenoxid. Als Startermoleküle kommen in Betracht: Wasser, Dicarbonsäuren, mehrwertige Alkohole wie Ethylenglykol, Propylenglykol-1,2, Diethylenglykol, Dipropylenglykol und Dimerdiole (Fa. Henkel).

Die langkettigen Diole aus den oben genannten Bausteinen haben ein Molekulargewicht von mehr als 1 000, insbesondere 2 000 bis 6 000 (Gelchromatographie). Sie werden in einer Menge von 0 bis 0,7, vorzugsweise 0,2 bis 0,5 HO-Äquivalenten pro NCO-Gruppe hinzugegeben.

Die kurzkettigen Diole werden in einer Menge von 0 bis 0,5, insbesondere 0,1 bis 0,3 HO-Äquivalenten pro NCO-Gruppe eingesetzt. Sie haben ein Molekulargewicht von weniger als 1 000, insbesondere weniger als 100. Konkrete Beispiele sind die Diole, die zur Herstellung der langkettigen Diole verwendet wurden.

Das Polymer-MDI-Prepolymer kann auch aus Polymer-MDI und Verbindungen hergestellt werden. die andere NCO-reaktive Gruppen tragen als die HO-Gruppe, z. B. die COOH-, SH-, NH₂- oder NH-Gruppe. Vorzugsweise beträgt die Funktionalität 1,5 bis 2,5, insbesondere 2.

Aus den Diisocyanaten und den Diolen werden auf bekannte Art und Weise die Polymer-MDI-Prepolymeren hergestellt. Als Katalysatoren werden solche eingesetzt, die die Reaktion der Isocyanatgruppe mit der OH-Gruppe, insbesondere mit Wasser, beschleunigen, nicht jedoch deren Trimerisierung. Konkrete Beispiele sind 2,2'-Dimorpholinodiethylether, Bis(2-dimethylaminoethyl)ether, Dabco X-DM (Fa. Air Products) sowie N-Ethylmorpholin. Unter Umständen können aber auch andere Katalysatoren in Frage kommen, wenn sie die Isocyanatgruppen während der Lagerung nicht trimerisieren, z.B. N-substituierte Morpholine sowie deren Mischungen mit Propylenoxid-Addukten des Triethanolamins, sowie die bekannten Metallkatalysatoren, insbesondere des Zinns. Unabhängig von der Art ihrer Herstellung sind die reaktiven Isocyanat-haltigen Komponenten auf der Basis von MDI durch folgende Merkmale charakterisiert: Sie haben einen Gehalt an Di-Isocyanat von weniger als 20, insbesondere weniger als 10, vor allem weniger als 5 Gew.-%, bezogen auf die reaktive Komponente. Sie haben eine NCO-Funktionalität von 2,7 bis 5, insbesondere von 2,8 bis 4 und einen NCO-Gehalt von 26,0 bis 30,0 Gew.-%, insbesondere von 27,0 bis 29,0, bezogen auf die reaktive Komponente sowie eine Viskosität von 5 bis 200, insbesondere von 10 bis 100 Pas bei 25 °C nach DIN 53015.

Die übrigen Polyisocyanate und Isocyanat-Prepolymeren sind unabhängig von der Art ihrer Herstellung durch folgende Merkmale charakterisiert: Sie haben einen Gehalt an Isocyanat-Monomeren von weniger als 3,0, insbesondere weniger als 1,0, vor allem weniger als 0,5 Gew.-%, bezogen auf das Prepolymere. Sie haben eine NCO-Funktionlität von 2 bis 5, insbesondere von 2,5 bis 4,2 und einen NCO-Gehalt von 8 bis 30 Gew.-%, insbesondere von 10 bis 23, bezogen auf das Prepolymere sowie eine Viskosität von 5 bis 200, insbesondere von 10 bis 100 Pas bei 25 °C nach DIN 53015. Die Prepolymeren werden vorzugsweise hergestellt aus aliphatischen Diisocyanaten mit 2 bis 12, vorzugsweise 4 bis 8 C-Atomen und aus cycloaliphatischen Isocyanaten mit 5 bis 30, vorzugsweise 7 bis 12 C-Atomen. Darüber hinaus können aber auch aromatische Diisocyanate mit 8 bis 20 C-Atomen verwendet werden. Der Siedepunkt der Diisocyanate sollte max. bei 180 °C, vorzugsweise max. bei 160 °C bei 10 mbar liegen.

Die erfindungsgemäße Zusammensetzung zur Herstellung von Schaumkunststoff aus Einweg- Druckbehältern besteht notwendigerweise aus mindestens einem Polyisocyanat- bzw. Isocyanat-Prepolymeren, mindestens einem Katalysator für die Reaktion der Isocyanat-Gruppe mit der OH-Gruppe, insbesondere mit Wasser, mindestens einem Treibmittel und mindestens einen Schaumstabilisator. Die Zusammensetzungen sind dadurch gekennzeichnet, daß ihr in dem Druckbehälter verbliebener Rest spätestens 1 Tag nach der Anwendung einen Gehalt an Diisocyanat - Monomeren von weniger als 5,0 Gew.-% hat, bezogen auf den Restinhalt des entleerten Gebindes und daß das Isocyanat - Prepolymer einen Isocyanat - Gehalt von 8 bis 30 Gew.-% hat, bezogen auf das Prepolymer. Darüber hinaus können noch weitere Additive zugesetzt werden, z.B. Lösungsmittel, Flammschutzmittel, Weichmacher, Zellregler und Alterungsschutzmittel. Es entsteht eine Lösung oder Emulsion.

Als Katalysator wird vorzugsweise 2,2'-Dimorpholinodiethylether oder Bis(2-dimethylaminoethyl)ether eingesetzt. Er soll nur die Reaktion der NCO-Gruppe mit OH-Gruppen katalysieren, nicht dagegen deren Trimerisierung bei der Lagerung.

Als Treibmittel wird vorzugsweise eingesetzt 1,1,1,2-Tetrafluorethan, 1,1-Difluorethan und Dimethylether. Es können aber auch eingesetzt werden n-Propan, n-Butan und Isobutan.

Als Schaumstabilisator wird vorzugsweise eingesetzt Siloxan-Oxyalkylen-Copolymeren, z. B. Tegostab B 8404 (Fa. Goldschmidt) oder Dabco DC-190, DC-193 (Air Products).

Als Weichmacher werden vorzugsweise eingesetzt: Tris(2-Chlorpropyl)phosphat, Tris(chlorethyl)phosphat, Diphenylkresylphosphat, Dimethylmethylphosphonat (DMMP) und Diethylethylphosphonat (DEEP).

Der Inhalt der Druckgefäße setzt sich quantitativ vorzugsweise folgendermaßen zusammen (in Gew.-%):
- 50 bis 90, vorzugsweise 60 bis 85 der Isocyanatkomponente,
- 0,1 bis 5,0, vorzugsweise 0,5 bis 20 an Katalysatoren,
- 5 bis 35, vorzugsweise 10 bis 25 an Treibmittel und
- 0,1 bis 5,0, vorzugsweise 0,5 bis 3,0 an Schaumstabilisator,
- 0 bis 20, vorzugsweise 3 bis 15 an Weichmacher.
Von den fakultativen Additiven kann das Flammschutzmittel in einer Menge von 2 bis 50, vorzugsweise von 5 bis 15 zugesetzt werden.

Die übrigen fakultativen Additive können in einer Menge von 0,1 bis 3,0 zugesetzt werden, insbesondere von 0,2 bis 1,5. Bei den Angaben handelt es sich um Gew.-%, bezogen auf die gesamte Zusammensetzung.

Neben diesen Zusammensetzungen mit einem sehr geringen Gehalt an Diisocyanaten können auch übliche Zusammensetzungen mit den üblichen Gehalten an Isocyanaten eingesetzt werden, wenn ihnen unmittelbar vor ihrer Verwendung (Verschäumung), mindestens ein Trimerisierungskatalysator, zugesetzt werden, die zusätzlich noch die Feuchtigkeitshärtung beschleunigen können. Konkrete Beispiele für derartige Katalysatoren sind Dibutylzinndilaurat, Kaliumacetat, Kalium-2-ethylhexoat, N,N-Dimethylcyclohexylamin und Tris-2,4,6-(dimathylaminomethyl)phenol. So wird erreicht, daß nicht nurdie Aushärtung des Schaumes beschleunigt wird, sondern daß auch das NCO-Prepolymere und Monomere im Behälter innerhalb 1 Tages in das polymere Isocyanurat überführt wird. Nach dieser Zeit ist nahezu kein monomeres Diisocvanat im restlichen Reaktionsgemisch mehr enthalten. Nach dieser Abreaktion können die Druckgaspackungen wie gewöhnliche Packungen entsorgt und recyclisiert werden, weil sie spätestens nach 24 Stunden nicht mehr als Gefahrstoff anzusehen sind.

Der Trimerisierungskatalysator muß getrennt von der übrigen Zusammensetzung gelagert werden und unmittelbar vor der Verschäumung hinzugefügt und gemischt werden. Dafür geeignete Aerosolpackungen sind bekannt (siehe z. B. EP 0 024 659 oder DE 36 10 345).

Um sicher zu sein, daß der Aminkatalysator und die Zusammensetzung ausreichend vermischt sind, ist es zweckmäßig, den Aminkatalysator zusammen mit einem Farbstoff und/oder Pigment zuzumischen. Falls die Mischung unvollständig war oder überhaupt nicht gemischt wurde, dann ist der Schaum ungleichmäßig eingefärbt oder überhaupt nicht gefärbt.

In einer anderen Ausgestaltung der Erfindung mischt man den normalen, für die Feuchtigshärtung notwendigen Katalysator schon bei der Abfüllung der Dosen zu. Nach der Entleerung der Dose wird dann ein weiterer Katalysator der in dem Druckgefäß noch vorhandenen Restmenge an Isocyanat-Prepolymerem zugesetzt, damit es innerhalb kurzer Zeit trimerisiert und sich dadurch in einen "Nichtgefahrstoff" umwandelt. Es entstehen nämlich dabei hochmolekulare spröde Polyisocyanurate. Wenn man niedermolekulare Monoalkohole wie z.B. Ethanol und Propanol im Überschuß hinzufügt, entstehen weichmacherähnliche Urethane. Falls man Diole mit einem Molekulargewicht von < 400 im Überschuß hinzufügt, entstehen oligomere Polyurethane mit OH-Endgruppen. Beides sind ebenfalls ungefährliche Stoffe.
Dafür geeignete Druckgasverpackungen sind ebenfalls bekannt und werden z.B. für Zweikomponenten-Polyurethanschäume eingesetzt. Vorzugsweise wird der Trimerisierungskatalysator, der Monoalkohol oder das Diol automatisch nach der normalen Verarbeitung des Schaumes freigesetzt. Dazu sind allerdings spezielle Verpackungen notwendig, wie sie z.B. in der EP 446 973 und EP 349 053 beschrieben sind. Beispielhaft sei erwähnt, daß in dem Druckbehälter ein weiterer kleiner Druckbehälter mit dem Katalysator enthalten sein kann, der sich automatisch entleert, wenn der Umgebungsdruck im großen Druckbehälter durch die Schaumentnahme auf weniger als 2,5 bar gefallen ist.

Die erfindungsgemäße Zusammensetzungen ermöglichen die Herstellung eines Einkomponenten-Kunststoffschaumes, der wie üblich mit Umgebungsfeuchtigkeit aushärtet. Aber auch ein Zweikomponenten-Kunststoffschaum ist ohne weiteres möglich, wenn der Zusammensetzung ein Polyol in möglicht äquivalenten Mengen oder in einem geringen Unterschuß zugesetzt wird. Bei dem Polyol handelt es sich um üblicherweise eingesetzte Stoffe mit 2 bis 6 C-Atomen und 2 oder 3, vorzugsweise primären OH-Gruppen.

Der so hergestellte Kunststoffschaum eignet sich insbesondere zum Dämmen, Montieren und Dichten im Kühlgerätebau, im Transportwesen und vorzugsweise im Bauwesen, insbesondere vor Ort. Die Erfindung wird anhand von folgenden Beispielen erläutert:

### Beispiele

### Beispiel 1:

Aus 191 g eines handelsüblichen Cyclotrimerisates des Hexan-1,6-diisocyanat, welches einen NCO-Gehalt von 22,6 Gew.-% (= 1 Mol NCO) aufweist und unter den Bezeichnungen Tolonate HDT (Rhone-Poulenc) bzw. Desmodur N 3300 (Bayer) im Handel ist, wurde durch Addition von 0,05 Mol Ethylenglykol (= 0,1 Mol OH) ein hochviskoses Addukt mit einer Viskosiät von ca. 10 Pas bei 25 °C (DIN 53015) hergestellt. Zu 96 g dieses NCO-Prepolymeren wurden 2,0 g eines handelsüblichen Silikon-Tensides mit der Bezeichnung Tegostab B-8404 (Fa. Goldschmidt) sowie 2,0 g eines Katalysators mit der Bezeichnung Texacat ZF-20 (chemische Bezeichnung: Bis(2-Dimethylaminoethyl)ether zugesetzt und das Gemisch in einen Einweg-Druckbehälter eingefüllt. Anschließend wurden in den Druckbehälter 25,0 g Dimethylether und 10,0 g 1,1,1,2-Tetrafluorethan (HFKW-134a) eingefüllt und der Druckbehälter so lange geschüttelt, bis das NCO-Prepolymere in der Treibgasmischung gelöst war. Der Gehalt an monomerem HDI betrug < 0,1 Gew.-%, bezogen auf die Zusammensetzung insgesamt.

Das gelöste Produkte wurde anschließend aus dem Druckbehälter entnommen und bei einer Temperatur von 26 °C (Raumtemperatur) und einer relativen Luftfeuchtigkeit von 50 % in eine Fuge mit den Abmessungen 3,0 x 5,0 x 50,0 cm gebracht und dort ausgehärtet. Der entstandene Schaum war durch folgende Daten gekennzeichnet:

| | |
|---|---|
| Klebfreie Zeit der Oberfläche | 10 Minuten |
| Zeit bis zur vollständigen Härtung | 2 Stunden |
| Schaumstruktur | feinzellig |
| Rohdichte des Schaumstoffes | ca. 24 g/l |
| Härte des erhärteten Schaumstoffes | elastisch |

### Beispiele 2 bis 9:

Bei den folgenden Beispielen wurde neben dem HDI-Cyclotrimerisat ein technisch verfügbares IPDI-Cyclotrimerisat verwendet, welches die Firma Hüls unter der Bezeichnung Vestanate T 1890/100 vermarktet (NCO-Gehalt: 17,0 bis 17,5 Gew.-%, Schmelzbereich: 100 bis 115 °C. Monomeren-Gehalt: < 0,7 Gew.-%).

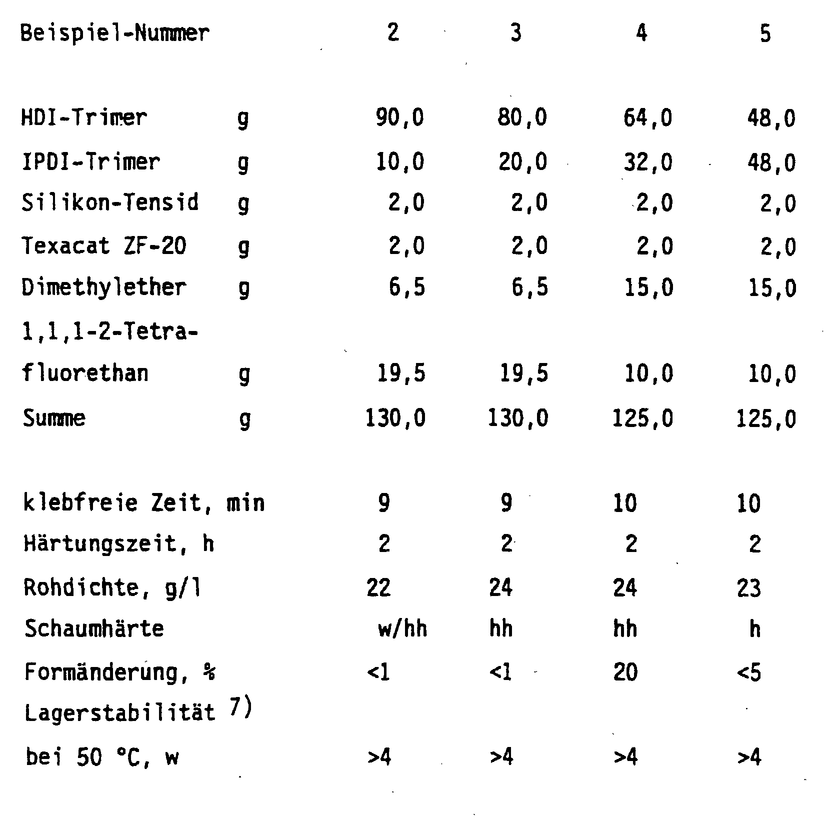

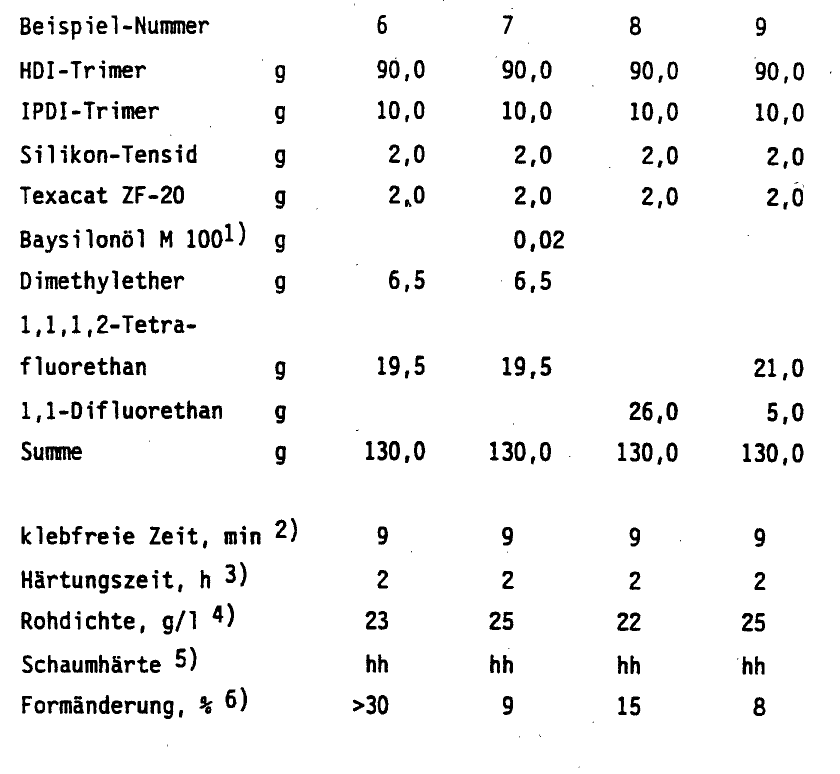

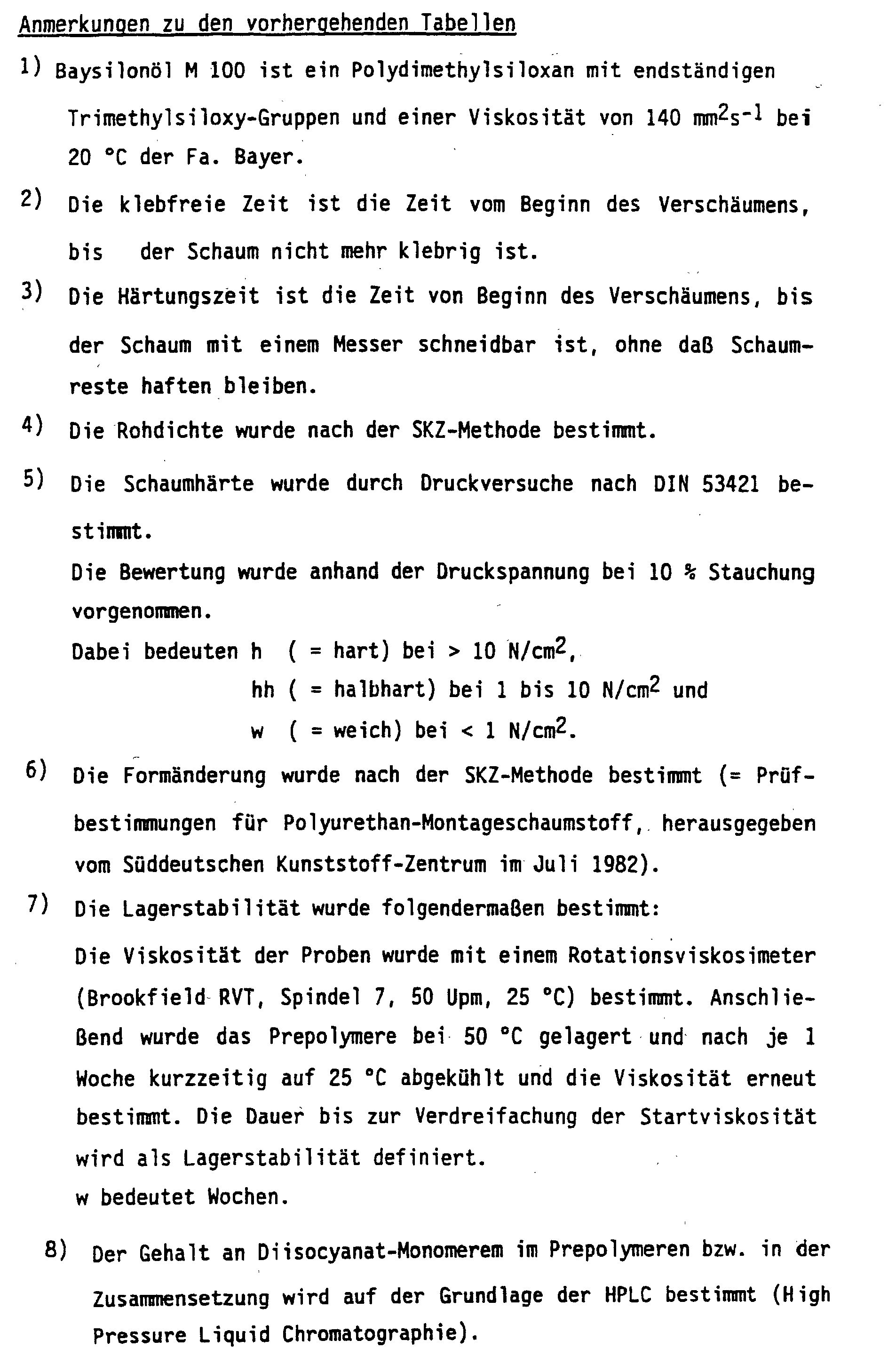

### Beispiel 10

### A. Herstellung des monomerarmen Polymer-MDI

800 g eines handelsüblichen technischen Methylendiphenylisocynates (MDI) mit einem Gehalt von ca. 53 Gew.-% Diphenylmethandiisocyanat (4,4'-; 2,4'-; 2,2'), einer Viskosität von ca. 200 mPas bei 25 °C, einem NCO-Gehalt von 31,0 Gew.-% und einer mittleren Funktionalität von ca. 2,7 wurden im Hochvakuum (ca. 0,05 mbar) durch Destillation in 2 Fraktionen von je ca. 400 g zerlegt. Die Sumpftemperatur betrug 160 bis 210 °C, die Brüdentemperatur ca. 170 °C.

Der von den isomeren Diphenylmethan-diisocyanaten befreite Destillationsrückstand wies folgende technische Daten auf:

| | |
|---|---|
| Aggregatzustand bei 20 °C | hochviskos |
| Viskosität bei 50 °C (Pas) | 102 |
| NCO-Gehalt (Gew.-%) | 28,0 |
| Gehalt an Diisocyanat (Gew.-%) | 2,5 |

Das Destillat stellt eine Mischung von isomeren Diphenylmethandiisocyanaten dar, die für die erfindungsgemäßen Schaumstoffe nicht von Interesse sind.

Aus dem durch Destillation erhaltenen Rückstand von monomerarmem Polymer-MDI wurden durch Zusatz üblicher nichtreaktiver Flammschutzmittel, Weichmacher, Silikon-Tenside, Katalysatoren und Treibgase feuchtigkeitshärtende Harz lösungen in Aerosoldosen hergestellt. Die aus diesem Behälter durch Entspannen erhaltenen Schaumstoffe wurden in den wichtigsten Eigenschaften geprüft.

Die Zusammensetzungen (erfindungsgemäße Beispiele a bis c sowie ein Vergleichsbeispiel eines handelsüblichen 1K-PU-Schaumes) sowie die durch Ausschäumung und Aushärtung im Normklima (23 °C, 50 % relative Feuchte) erhaltenen Prüfergebnisse gehen aus der folgenden Tabelle hervor:

| Beispiel | 10a | 10b | 10c | 10V |
|---|---|---|---|---|
| Polymer-MDI, F = 3,4, 28 % NCO | 60 | 60 | 60 | |
| technisches MDI, 31 % NCO-Gehalt; Funktionalität (F) = 2,5 | | | | 40 |
| Sojapolyol 180 ¹⁾ | | | | 20 |
| Tris(2-chlorpropyl)phosphat | 20 | 10 | 0 | 20 |
| Benzylbutylphthalat | 0 | 10 | 20 | 0 |
| Siloxan-Oxyalkylen-Copolymer | 1 | 1 | 1 | 1 |
| Dimethylpolysiloxan | 0,01 | 0,01 | 0,01 | 0,01 |
| 1,1,1, 2-Tetrafl uorethan | 15,0 | 15,0 | 15,0 | 15,0 |
| Dimethylether | 5,0 | 5,0 | 5,0 | 5,0 |
| klebfreie Zeit [Min.] | 5 | 5 | 5 | 8 |
| Schaumstruktur | feinzellig | feinzellig | feinzellig | |
| Rohdichte [kg/m³] | 29 | 28 | 28 | 27 |
| Formänderung [%] | < 1 | < 1 | < 1 | < 1 |
| Flammenhöhe, max. [cm] (DIN-4102, B2-Test) | 10,5 | 13,0 | 20,0 | 15,0 |

| | | | | |
|---|---|---|---|---|
| ¹⁾ Ringöffnungsprodukt aus epoxidiertem Sojaöl mit MeOH; OH-Zahl: 180. | | | | |

## Patentansprüche

1. Zusammensetzung aus mindestens einem Polyisocyanat bzw. Isocyanat-Prepolymeren, mindestens einem Katalysator für die Reaktion der Isocyanat-Gruppe mit der OH-Gruppe nicht jedoch for deren Trimevisierung außer einer Kombination von DMDEE und DMP für die Reaktion eines aliphatischen Polyisocyanats auf HDI-Basis mit einem Polyesterol, mindestens einem Treibmittel und mindestens einem Schaumstabilisator zur Herstellung von Schaumkunststoffen aus Einweg-Druckbehältern, **dadurch gekennzeichnet, daß** ihr in dem Druckbehälter verbliebener Rest spätestens 1 Tag nach der Anwendung einen Gehalt an Diisocyanat-Monomeren von weniger als 5,0 Gew.-% hat, bezogen auf den Restinhalt des entleerten Gebindes und daß das Isocyanat-Prepolymere einen Isocyanat-Gehalt von 8 bis 30 Gew.-% hat, bezogen auf das Prepolymere.

2. Zusammensetzung nach Anspruch 1, **dadurch gekennzeichnet, daß** ihr Gehalt an Diisocyanat-Monomeren kleiner als 2,0 ist, bezogen auf den Gesamtinhalt des Gebindes.

3. Zusammensetzung nach Anspruch 1 oder 2, **dadurch gekennzeichnet, daß** die Zusammensetzung vor der Anwendung folgende Komponenten enthält:
A) als reaktive Komponente mindestens ein Isocyanat-Prepolymer mit einem Gehalt an Diisocyanat-Monomeren von weniger als 3,0 Gew.-%, bezogen auf das Prepolymere, mit einer NCO-Funktionalität von 2 bis 5, mit einem NCO-Gehalt von 8 bis 30 Gew.-%, bezogen auf das Prepolymere und mit einer Viskosität von 5 bis 200 Pa·s bei 25 °C nach DIN 53015, wobei das Prepolymere hergestellt wurde aus aliphatischen Diisocyanaten mit 2 bis 36 C-Atomen, cycloaliphatischen Diisocyanaten mit 5 bis 30 C-Atomen und/oder aromatischen Diisocyanaten mit 8 bis 20 C-Atomen, jeweils mit einem Siedepunkt von max. 180 °C bei 10 mbar,
B) mindestens einen Katalysator für die Reaktion der Isocyanat-Gruppe mit HO-Gruppen,
C) mindestens ein Treibmittel,
D) mindestens einen Schaumstabilisator sowie
E) ggfl. Additive wie Lösungsmittel, Flammschutzmittel und Weichmacher.

4. Zusammensetzung nach Anspruch 3, **dadurch gekennzeichnet, daß** die reaktive Komponente ein Cyclotrimerisat eines Diisocyanates (Isocyanurat) ist, insbesondere Gemische aus HDI und IPDI sowie deren Mischtrimerisate.

5. Zusammensetzung nach Anspruch 3, **dadurch gekennzeichnet, daß** die reaktive Komponente ein Prepolymer aus Diisocyanaten und/oder Isocyanuraten mit NCO-Gruppen und Polyolen ist.

6. Zusammensetzung nach mindestens einem der Ansprüche 1 bis 5, **dadurch gekennzeichnet, daß** das Prepolymere aus Diisocyanaten mit unterschiedlicher Reaktivität der NCO-Gruppen hergestellt wurde.

7. Zusammensetzung nach mindestens einem der Ansprüche 1 bis 6, **gekennzeichnet durch** folgende Mengenangaben:
- 50 bis 90 Gew.-% des Prepolymeren,
- 0,1 bis 5,0 Gew.-% des Katalysators,
- 5 bis 35 Gew.-% des Treibmittels,
- 0,1 bis 5,0 Gew.-% des Schaumstabilisators und
- 0 bis 51,5 Gew.-% an Additiven.

8. Einkomponenten-Kunststoffschaum, herstellbar aus der Zusammensetzung nach mindestens einem der Ansprüche 1 bis 7 und Feuchtigkeit.

9. Zweikomponenten-Kunststoffschaum, herstellbar aus der Zusammensetzung nach mindestens einem der Ansprüche 1 bis 7 als erster Komponente und einem Polyol als zweiter Komponente.

10. Kunststoffschaum nach einem der Ansprüche 8 oder 9, **gekennzeichnet durch** seine Verwendung als Dämm- oder Montage-Schaum, insbesondere vor Ort.

11. Zusammensetzung nach Anspruch 1, 2, 8, 9 oder 10, **dadurch gekennzeichnet, daß** die Zusammensetzung vor der Anwendung folgende Komponenten enthält:
A) als reaktive Komponente mindestens ein Polymer-MDI bzw. Polymer-MDI-Prepolymer mit einem Gehalt an Diisocyanat-Monomeren von weniger als 20 Gew.-%, bezogen auf das Polymer-MDI, mit einer durchschnittlichen NCO-Funktionalität von > 2,7, mit einem NCO-Gehalt von 26,0 bis 30,0 Gew.-%, bezogen auf das Polymer-MDI und mit einer Viskosität von 5 bis 2 000 Pa.s bei 25 °C nach DIN 53015, wobei das Polymer-MDI herstellbar ist aus technischem MDI (Roh-MDI) mit einer durchschnittlichen Funktionalität von > 2,3 durch Abtrennung des Diisocyanato-diphenylmethans,
B) mindestens einen Katalysator für die Reaktion der Isocyanat-Gruppe mit HO-Gruppen,
C) mindestens ein Treibmittel,
D) mindestens einen Schaumstabilisator sowie
E) ggf. Additive wie Lösungsmittel, Flammschutzmittel und Weichmacher.

12. Zusammensetzung nach mindestens einem der Ansprüche 1, 2, 9, 10 oder 11, **dadurch gekennzeichnet, daß** die reaktive Komponente ein Prepolymer aus dem Polymer-MDI und Polyolen, insbesondere Diolen mit 2 bis 6 C-Atomen, ist.

13. Zusammensetzung nach mindestens einem der Ansprüche 1, 2, 9, 10, 11 oder 12 **dadurch gekennzeichnet, daß** bis zu 50 Gew.-% des Polymer-MDI durch monomerarme NCO-Prepolymere des HDI, TDI, IPDI, 2,4-MDI, 4,4'-MDI bzw. durch Cyclotrimerisate aliphatische Diisocyanate mit 4 bis 14 C-Atomen ersetzt werden, insbesondere um mit Feuchtigkeit härtende Schaumstoffe unterschiedlicher Härte und Elastizität herzustellen.

14. Zusammensetzung nach mindestens einem der Ansprüche 1, 2, oder 9 bis 13, **gekennzeichnet durch** folgende Mengenangaben:
- 50 bis 90 Gew.-% des Polymer-MDI bzw. seines Prepolymeren,
- 0,1 bis 5,0 Gew.-% des Katalysators,
- 5 bis 35 Gew.-% des Treibmittels,
- 0,1 bis 5,0 Gew.-% des Schaumstabilisators und
- 0 bis 51,5 Gew.-% an Additiven.

## Claims

1. A composition of at least one polyisocyanate or isocyanate prepolymer, at least one catalyst for the reaction of the isocyanate group with the OH group, but not for its trimerization except for a combination of DMDEE and DMP for the reaction of an aliphatic polyisocyanate based on HDI with a polyesterol, at least one blowing agent and at least one foam stabilizer for the production of foam plastics from disposable pressurized containers, **characterized in that** the residue remaining in the pressurized container one day at the latest after application has a diisocyanate monomer content of less than 5.0% by weight, based on the residual contents of the emptied container, and **in that** the isocyanate prepolymer has an isocyanate content of 8 to 30% by weight, based on the prepolymer.

2. A composition as claimed in claim 1, **characterized in that** it has a diisocyanate monomer content of less than 2.0% by weight, based on the total contents of the container.

3. A composition as claimed in claim 1 or 2, **characterized in that** the composition contains the following components before its application:
A) as reactive component, at least one isocyanate prepolymer with a diisocyanate monomer content of less than 3.0% by weight, based on the prepolymer, an NCO functionality of 2 to 5, an NCO content of 8 to 30% by weight, based on the prepolymer, and a viscosity of 5 to 200 Pa·s at 25°C, as measured in accordance with DIN 53015, the prepolymer having been produced from aliphatic diisocyanates containing 2 to 36 carbon atoms, cycloaliphatic diisocyanates containing 5 to 30 carbon atoms and/or aromatic diisocyanates containing 8 to 20 carbon atoms, each with a boiling point of at most 180°C at 10 mbar,
B) at least one catalyst for the reaction of the isocyanate group with HO groups,
C) at least one blowing agent,
D) at least one foam stabilizer and
E) optionally additives, such as solvents, flameproofing agents and plasticizers.

4. A composition as claimed in claim 3, **characterized in that** the reactive component is a cyclotrimer of a diisocyanate (isocyanurate), more particularly a mixture of HDI and IPDI and mixed trimers thereof.

5. A composition as claimed in claim 3, **characterized in that** the reactive component is a prepolymer of diisocyanates and/or isocyanurates containing NCO groups and polyols.

6. A composition as claimed in at least one of claims 1 to 5, **characterized in that** the prepolymer has been produced from diisocyanates with NCO groups differing in their reactivity.

7. A composition as claimed in at least one of claims 1 to 6, **characterized by** the following quantities of its constituents:
- 50 to 90 % by weight of the prepolymer,
- 0.1 to 5.0 % by weight of the catalyst,
- 5 to 35 % by weight of the blowing agent,
- 0.1 to 5.0 % by weight of the foam stabilizer and
- 0 to 51.5% by weight of additives.

8. A one-component foam plastic obtainable from the composition claimed in at least one of claims 1 to 7 and moisture.

9. A two-component foam plastic obtainable from the composition claimed in at least one of claims 1 to 7 as the first component and a polyol as the second component.

10. A foam plastic as claimed in claim 8 or 9, **characterized by** its use as an insulating or assembly foam, more particularly in situ.

11. A composition as claimed in claim 1, 2, 8, 9 or 10, **characterized in that** the composition contains the following components before its application:
A) as reactive component, at least one polymer-MDI or polymer-MDI prepolymer with a diisocyanate monomer content of less than 20% by weight, based on the polymer-MDI, an average NCO functionality of > 2.7, an NCO content of 26.0 to 30.0% by weight, based on the polymer-MDI, and a viscosity of 5 to 2,000 Pa·s at 25°C according to DIN 53015, the polymer-MDI being obtainable from technical MDI (crude MDI) with an average functionality of > 2.3 by removal of the diisocyanatodiphenylmethane,
B) at least one catalyst for the reaction of the isocyanate group with HO groups,
C) at least one blowing agent,
D) at least one foam stabilizer and
E) optionally additives, such as solvents, flameproofing agents and plasticizers.

12. A composition as claimed in at least one of claims 1, 2, 9, 10 or 11, **characterized in that** the reactive component is a prepolymer of the polymer MDI and polyols, more particularly diols containing 2 to 6 carbon atoms.

13. A composition as claimed in at least one of claims 1, 2, 9, 10, 11 or 12, **characterized in that** up to 50% by weight of the polymer MDI is replaced by low-monomer NCO prepolymers of HDI, TD1, IPDI, 2,4-MDI, 4,4'-MDI or by cyclotrimers of aliphatic diisocyanates containing 4 to 14 carbon atoms, more especially for producing moisture-curing. foams differing in their hardness and elasticity.

14. A composition as claimed in at least one of claims 1, 2 or 9 to 13, **characterized by** the following quantities of its components:
- 50 to 90 % by weight of the polymer-MDI or its prepolymer,
- 0.1 to 5.0 % by weight of the catalyst,
- 5 to 35 % by weight of the blowing agent,
- 0.1 to 5.0 % by weight of the foam stabilizer and
- 0 to 51.5% by weight of additives.

## Revendications

1. Composition à base d'au moins un polysocyanate ou de prépolymère d'isocyanate d'au moins un catalyseur pour la réaction des groupes isocyanate avec les groupes OH, mais cependant pas pour leur trimérisation excepté une combinaison de DMDEE, et de DMP en vue de la réaction d'un polysocyanate aliphatique à base HDI avec un polyesterol, d'au moins un agent propulseur, et d'au moins un agent stabilisant de la mousse en vue de la production de matières plastiques cellulaires dans les récipients pressurisés jetables.
**caractérisée en ce que**
leur résidu demeuré dans le récipient pressurisé a une teneur en monomères de diisocyanate, au plus tard 1 jour après l'utilisation, de moins de 5,0 % en poids, rapporté au contenu résiduel du flacon vidé et, le prépolymère d'isocyanate a une teneur en isocyanate allant de 8 à 30 % en poids rapporté au prépolymère.

2. Composition selon la revendication 1,
**caractérisée en ce que**
sa teneur en monomères de diisocyanate est plus petite que 2,0 rapporté au contenu total du flacon.

3. Composition selon la revendication 1 ou 2,
**caractérisée en ce que**
la composition avant l'utilisation contient les composants suivants:
A) comme composant réactif au moins un prépolymère d'isocyanate ayant une teneur en monomères de diisocyanate de moins de 3,0 % en poids, rapporté au prépolymère, ayant une fonctionnabilité en NCO de 2 à 5 en NCO de 8 à 30 % en poids, rapporté au prépolymère et ayant une viscosité allant de 5 à 200 Pa.s à 25°C déterminée selon la norme DIN 53015, dans lequel le prépolymère a été préparé à partir de diisocyanate aliphatiques ayant de 2 à 36 atomes de carbone, de diisocyanates cycloaliphatiques ayant de 5 à 30 atomes de carbone et/ou de diisocyanates aromatiques ayant de 8 à 20 atomes de carbone, à chaque fois avec un point d'ébullition d'au maximum 180°C à 10 mbars,
B) au moins un catalyseur pour la réaction des groupes isocyanate avec des groupes OH,
C) au moins un agent propulseur,
D) au moins un agent stabilisant de la mousse,
E) ainsi que, le cas échéant, des additifs comme des solvants, des agents ignifuges et des agents plastifiants.

4. Composition selon la revendication 3,
**caractérisée en ce que**
le composant réactif est un cyclotrimérisat d'un diisocyanate (isocyanurate), en particulier des mélanges de HDI et de IPDI ainsi que leurs trimérisats mixtes.

5. Composition selon la revendication 3,
**caractérisée en ce que**
le composant réactif est un prépolymère a base de diisocyanates et/ou d'isocyamurates ayant des groupes NCO et des polyols.

6. Composition selon au moins l'une des revendications 1 à 5,
**caractérisée en ce que**
le prépolymère a été fabriqué à partir de diisocyanates ayant une réactivité différente des groupes NCO.

7. Composition selon au moins une des revendications 1 à 6,
**caractérisée par** les données en poids suivantes:
- de 50 à 90 % en poids de prépolymère,
- de 0,1 à 5,0 % en poids de catalyseur,
- de 5 à 35 % en poids d'agent propulseur,
- de 0,1 à 5,0 % en poids d'agent stabilisant de la mousse,
- de 0 a 51,5 % en poids d'additifs.

8. Mousse de matière plastique à un seul composant, que l'on peut fabriquer à partir de la composition selon au moins l'une des revendications 1 à 7, et de l'humidité.

9. Mousse de matière plastique à deux composants que l'on peut fabriquer à partir de la composition selon au moins l'une des revendications 1 à 7, comme premier composant et à partir d'un polyol comme deuxième composant.

10. Mousse de matière plastique selon l'une des revendications 8 ou 9,
**caractérisée par**
son utilisation comme mousse d'isolation ou d'assemblage, en particulier sur place.

11. Composition selon la revendication 1,2,8,9 ou 10,
**caractérisée en ce que**
la composition contient avant l'utilisation, les composants suivants:
A) comme composant réactif au moins un MDI polymère ou un prépolymère de MDI polymère, ayant une teneur en monomères de diisocyanate de moins de 20 % en poids, rapporté au MDI polymère, avec une fonctionnalité moyenne en NCO de > 2,7, ayant une teneur en NCO de 26,0 à 30,0 % en poids, rapporté au MDI polymère, et ayant une viscosité allant de 5 à 2000 mPa.s à 25°C selon la norme DIN 53015, dans lequel le MDI polymère est susceptible d'être préparé à partir de MDI technique (MDI brut) ayant une fonctionnalité moyenne de > 2,3, par séparation du diisocyanato-diphénylméthane,
B) au moins un catalyseur pour la réaction des groupes Isocyanate avec des groupes OH,
C) au moins un agent propulseur,
D) au moins un agent stabilisant de la mousse,
E) ainsi que, le cas échéant, des additifs comme un solvant, un agent ignifuges et des agent plastifiant.

12. Composition selon au moins l'une des revendications 1, 2, 9, 10
ou 11,
**caractérisée en ce que**
le composant réactif est un prépolymère à base de MDI polymère et de polyols, en particulier des diols ayant de 2 à 6 atomes de carbone.

13. Composition selon au moins l'une des revendications 1, 2, 9, 10, 11 ou 12,
**caractérisée en ce que**
jusqu'à 50 % en poids du MDI polymère sont remplacés par des prépolymères de Nco pauvres en monomère de HDI, TDI, IPDI, 2,4-MDI, 4,4'-MOI ou par des cyclotrimérisats de diisocyanates aliphatiques ayant de 4 a 14 atomes de carbone, en particulier pour produire des mousses durcissant à l'humidité, de différentes duretés et élasticité.

14. Composition selon au moins l'une des revendications 1,2 ou de 9 à 13,
**caractérisée par**
les données en poids suivantes:
- de 50 à 90 % en poids, de MDI polymère ou de son prépolymère,
- de 0, 1 à 5,0 % en poids, de catalyseur,
- de 5 a 35 % en poids, d'agent propulseur,
- de 0,1 à 5,0 % en poids, d'agent stabilisant de la mousse et,
- de 0 à 51,5 % en poids, d'additifs.
